Europäisches Patentamt

European Patent Office

Office européen des brevets

(19)

(11) **EP 0 791 027 B1**

(12) **EUROPÄISCHE PATENTSCHRIFT**

(45) Veröffentlichungstag und Bekanntmachung des Hinweises auf die Patenterteilung:
**01.09.1999 Patentblatt 1999/35**

(51) Int Cl.⁶: **C08G 75/02**

(21) Anmeldenummer: **95937866.2**

(86) Internationale Anmeldenummer:
**PCT/EP95/04339**

(22) Anmeldetag: **06.11.1995**

(87) Internationale Veröffentlichungsnummer:
**WO 96/15178 (23.05.1996 Gazette 1996/23)**

(54) **OXIDATION VON SCHWEFELHALTIGEN POLYMEREN MIT NO 2?/N 2?O 4?**

OXIDATION OF SULPHUROUS POLYMERS WITH NO 2?/N 2?O 4?

OXYDATION DE POLYMERES SULFUREUX AVEC DU NO 2?/N 2?O 4?

(84) Benannte Vertragsstaaten:
**AT CH DE FR GB IT LI SE**

(30) Priorität: **09.11.1994 DE 4440010
24.08.1995 DE 19531163**

(43) Veröffentlichungstag der Anmeldung:
**27.08.1997 Patentblatt 1997/35**

(73) Patentinhaber: **Ticona GmbH
65451 Kelsterbach (DE)**

(72) Erfinder:
• **SCHÖNFELD, Axel
D-65207 Wiesbaden (DE)**
• **SCHLEICHER, Andreas
D-65614 Beselich (DE)**
• **FRANK, Georg
D-72074 Tübingen (DE)**

(56) Entgegenhaltungen:
EP-A- 0 051 690          EP-A- 0 623 639
WO-A-91/18041           US-A- 3 948 865
US-A- 5 209 855

• PATENT ABSTRACTS OF JAPAN Bd. 015, Nr. 293 (C-0853) 25 Juli 1991 & JP,A,03 104 923 (KURARAY CO LTD) 01 Mai 1991
• PATENT ABSTRACTS OF JAPAN Bd. 015, Nr. 293 (C-0853) 25 Juli 1991 & JP,A,03 104 924 (KURARAY CO LTD) 01 Mai 1991

**Beschreibung**

Die Erfindung betrifft die Oxidation von schwefelhaltigen Polymeren mit $NO_2/N_2O_4$ als Oxidationsmittel.

Schwefelhaltige Polymere wie Polyarylenthioether sind lange bekannt. Aufgrund ihrer hohen Wärmeformbeständigkeit und guten Chemikalienresistenz werden diese Polymere für hochbeanspruchte Bauteile herangezogen. Bei einigen Anwendungen werden jedoch höhere Materialanforderungen gestellt. Speziell ist häufig eine Anhebung der Glastemperatur der Polymeren wünschenswert. Es ist beschrieben, daß durch eine polymeranaloge Oxidation von Polyphenylensulfid in Essigsäure mit konzentrierter Salpetersäure während 24 Stunden bei 0 bis + 5°C eine Umsetzung zu Polyphenylensulfoxid möglich sein soll (US 3,303,007). Unter "polymeranalog" ist die Umwandlung eines Polymeren in ein anderes zu verstehen. Die angeführten Eigenschaftswerte für das gebildete Polymer deuten jedoch darauf hin, daß kein Polymeres mit einem Schwefel/Sauerstoff-Verhältnis von 1 zu 1 erhalten wurde, da sonst die Werte für die Wärmeformbeständigkeit erhöht sein müßten. Nachteile des beschriebenen Verfahrens sind erstens die notwendige, lange Reaktionszeit, zweitens die Möglichkeit einer elektrophilen Addition und drittens der acide Angriff der starken mineralischen Säure an der Thioetherbindung bei langen Reaktionszeiten (Abbaureaktionen).

Es ist bekannt, daß $NO_2$ und sein Dimer $N_2O_4$ in einem chemischen Gleichgewicht zueinander stehen (Hollemann-Wiberg, Lehrbuch der Anorganischen Chemie, Walter de Gruyter & Co. Berlin 1964, 70. Auflage, S. 238/239).

$$2\ NO_2 \rightleftharpoons N_2O_4\ +\ 13.9\ kcal$$

Je nach Temperatur und Konzentration liegt ein mehr oder weniger großer Teil des $NO_2$ als $N_2O_4$ vor. Bei einer Konzentration von mehr als 99 % $NO_2/N_2O_4$ in einem abgeschlossenen System liegt bei 27° C 80 % des Stickstoffdioxides als $N_2O_4$ und bei 50° C immer noch 60 % als $N_2O_4$ vor. Erst bei 135° C ist nur noch 1 % $N_2O_4$ vorhanden.

Aufgabe der Erfindung ist es, Verfahren zur Oxidation von schwefelhaltigen Polymeren wie Polyarylensulfiden zu entwickeln, die wesentlich kürzere Reaktionszeiten bei milden Reaktionstemperaturen erfordern. Auch ist die Verwendung von Polyarylensulfiden mit höheren Molekulargewichten als Ausgangsmaterial erwünscht.

Die Aufgabe wurde gelöst durch den Einsatz von $NO_2/N_2O_4$ als Oxidationsmittel, wobei der Anteil an $N_2O_4$ durch die Reaktionstemperatur bestimmt wird (s. o.).

Im folgenden wird das zur Oxidation verwendete Gleichgewichtssystem $NO_2/N_2O_4$ mit $N_2O_4$ bezeichnet.

Die Erfindung bezieht sich auf ein Verfahren zur Oxidation eines schwefelhaltigen Polymers, bei dem das schwefelhaltige Polymer mit $NO_2$ oder $N_2O_4$ in Kontakt gebracht wird.

Die Oxidation des schwefelhaltigen Polymers mit $N_2O_4$ gemäß der Erfindung führt mit hoher Selektivität zur Bildung von Sulfoxidbrücken. Dies ist um so mehr überraschend, als $N_2O_4$ ein extrem starkes Oxidationsmittel ist. Durch entsprechenden Einsatz der Menge an $N_2O_4$ und die Wahl der Reaktionsdauer ist es möglich, entweder die Schwefelbindung vollständig in die Sulfoxidbindung zu überführen oder eine beliebige Teiloxidation der Schwefelbindungen in dem schwefelhaltigen Polymer zu erzielen. Eine heterogene Oxidation oder Teiloxidation des schwefelhaltigen Polymers kann vollständig und durchgehend bei einem Material oder nur an der Oberfläche eines Materials erfolgen. Eine durchgehende heterogene Oxidation wird um so leichter erreicht, je feiner das Material ist. Besonders geeignet für eine durchgehende Oxidation sind ultradünne oder ultrafeine Teilchen, Fasern, Folien, Formteile oder Beschichtungen. Hier wird eine sehr gleichmäßige Oxidation erzielt. Ultradünn oder ultrafein bedeutet ein Durchmesser oder eine Dicke von bis zu 50 µm, vorzugsweise 1 bis 30 µm, insbesondere 5 bis 25 µm.

Die ultradünnen oder ultrafeinen Polyarylensulfoxid-Teile sind durch Oxidation von entsprechend dimensionierten Polyarylensulfid-Teilen herstellbar und zeichnen sich durch eine sehr große Homogenität der Zusammensetzung beziehungsweise durch einen sehr einheitlichen Oxidationsgrad aus, wodurch zum Beispiel die mechanischen, physikalischen und chemischen Eigenschaften verbessert werden. Ultradünne oder ultrafeine Polyarylensulfoxid-Teile zeigen beispielsweise aufgrund ihrer Homogenität eine verbesserte Temperaturbeständigkeit und Chemikalienresistenz aus.

Beispielsweise eignen sich Gewebe oder Vliese aus ultradünnen Polyarylensulfoxid-Fasern zur Herstellung von Filtern für Hochtemperatur-Anwendungen.

Ultrafeine Teilchen aus Polyarylensulfoxid eignen sich besonders zur Herstellung von geschäumtem Polyarylensulfid. Polyarylensulfoxid als Schäummittel von Polyarylensulfid wird in der deutschen Patentanmeldung P 44 28 737.2 vom 15. August 1994 mit dem Titel "Polyarylensulfid-Schäume und Verfahren zu deren Herstellung" beschrieben, worauf Bezug genommen wird.

Der Ausdruck schwefelhaltige Polymere umfaßt Polymere, die mindestens eine Arylenthioether-Einheit (-Ar-S-; Ar: Arylen) oder eine aliphatische Thioether-Einheit (-Alk-S-; Alk: Alkylen) enthalten, z.B. Polyarylenthioether oder Polysulfide. Die Arylengruppen können aus ein- oder mehrkernigen Aromaten bestehen. Die Arylengruppen bestehen aus mindestens einem fünf- oder sechsgliedrigen Ring, der ein oder mehrere Heteroatome enthalten und gegebenenfalls substituiert sein kann. Heteroatome sind z.B. Stickstoff oder Sauerstoff, Substituenten sind z.B. lineare oder verzweigte Alkylgruppen. Die schwefelhaltigen Polymere können außer Schwefelbrücken (-S-) auch Sulfoxidgruppen (-SO-) oder Sulfongruppen (-SO$_2$-) enthalten. Arylene sind beispielsweise Phenylen, Biphenylen (-C$_6$H$_4$-C$_6$H$_4$-) oder Naphthylen, die ein- oder mehrfach substituiert sein können. Substituenten sind z.B. geradkettige, cyclische oder verzweigte C$_1$-C$_{20}$-Kohlenwasserstoffreste, wie C$_1$-C$_{10}$-Alkylreste, z.B. Methyl, Ethyl, n-Propyl, iso-Propyl, n-Butyl, t-Butyl oder n-Hexyl, oder C$_6$-C$_{14}$-Arylreste, z.B. Phenyl oder Naphtyl; Halogenid-, Sulfonsäure-, Amino-, Nitro-, Cyano-, Hydroxy-, oder Carboxylgruppen.

Bevorzugte schwefelhaltige Polymere sind Polyarylenthioether, auch Polyarylensulfid genannt, insbesondere Polyphenylensulfid.

Bei der Oxidation von Polyarylensulfid mit N$_2$O$_4$ entstehen Polyarylensulfoxide. Polyarylensulfoxide sind Polymere, die wenigstens eine Arylensulfoxid-Einheit (-Ar-SO- ; Ar = Arylen-Rest, SO = Sulfoxid-Gruppe) enthalten.

Polyarylensulfide, insbesondere Polyphenylensulfid, lassen sich auf Grundlage der Reaktion von dihalogenierten Aromaten mit Natriumsulfid nach EDMONDS und HILL herstellen. Polyphenylensulfid und dessen Herstellung sind in "Ullmann's Encyclopedia of Industrial Chemistry, Volume A21, B. Elvers, S. Hawkins und G. Schulz (Eds.), VCH, Weinheim-New York 1992, S. 463-472) beschrieben, worauf Bezug genommen wird. Die Synthese von sulfongruppenhaltigen Polyarylensulfiden ist in Chimia 28 (1974) 567 beschrieben, worauf Bezug genommen wird.

Geeignet ist ein schwefelhaltiges Polymer beispielsweise mit einem mittleren Molekulargewicht M$_w$ von 4 000 bis 400 000, vorzugsweise von 10 000 bis 150 000, insbesondere 25 000 bis 100 000, bestimmt durch GPC.

Die mittlere Teilchengröße D$_{50}$ der eingesetzten Polymere liegt im allgemeinen im Bereich von um 5x10$^{-7}$ bis um 5x10$^{-2}$ m, vorzugsweise um 10$^{-5}$ bis um 10$^{-3}$ m und insbesondere um 10$^{-5}$ bis um 2x10$^{-4}$ m.

Das schwefelhaltige Polymer liegt zu Beginn der Oxidationsreaktion im allgemeinen in fester Form vor. Es kann auch in gelöster Form oder in Suspension eingesetzt werden.

Bei Einsatz von gelöstem schwefelhatigem Polymer handelt es sich bei der Reaktion mit N$_2$O$_4$ um eine homogene Oxidationsreaktion. Bei Einsatz von festem oder suspendiertem schwefelhaltigem Polymer handelt es sich bei der Reaktion mit N$_2$O$_4$ um eine heterogene Oxidationsreaktion.

Das Suspensionsmittel für das schwefelhaltige Polymer ist im allgemeinen ein chemisch inertes Lösungsmittel. So können Flüssigkeiten eingesetzt werden, in denen das Reaktionsprodukt unlöslich ist, beispielsweise Essigsäure, 1,1-Dichlorethan, Dichlormethan oder 1,1,2-Trichlor-1,2,2-trifluorethan. Es ist aber auch möglich, Flüssigkeiten zu verwenden, in denen sich das Oxidationsprodukt löst, wie Dichloressigsäure, Trichloressigsäure oder Trifluoressigsäure.

Die Reaktionstemperaturen liegen im allgemeinen im Bereich von minus 40 bis + 100° C, vorzugsweise von minus 5 bis 80° C. Die erforderliche Reaktionszeit hängt von dem Angebot an N$_2$O$_4$ und dem gewählten Reaktortyp ab und beträgt im allgemeinen 1 Minute bis 5 Stunden, vorzugsweise 15 Minuten bis 120 Minuten und insbesondere 15 Minuten bis 60 Minuten.

Es ist bei einer Optimierung der Reaktionsbedingungen möglich, Reaktionszeiten unter einer Minute zu erreichen.

Die Oxidation gemäß der Erfindung wird beispielsweise in einer Atmosphäre bestehend aus N$_2$O$_4$ mit einer Konzentration größer 40 Mol-%, vorzugsweise größer 60 Mol-% und insbesondere größer 70 Mol-% durchgeführt. Die Reaktion kann in einem temperierbaren Reaktor, statisch oder gerührt, drucklos oder unter Druck durchgeführt werden.
Die Oxidation mit N$_2$O$_4$ kann auch mit flüssigem N$_2$O$_4$ erfolgen.

Bei der Oxidation einer Sulfidgruppe zum Sulfoxid wird das N$_2$O$_4$ zum N$_2$O$_3$ reduziert. Durch eine nachträgliche Reaktion mit Luftsauerstoff kann dieses N$_2$O$_3$ wieder zum N$_2$O$_4$ zurückoxidiert und somit zurückgewonnen werden, so daß der hier beschriebene Prozess sehr kostengünstig durchgeführt werden kann.

Die Rückoxidation des N$_2$O$_3$ zum N$_2$O$_4$ kann beispielsweise auch in einem Kreislaufreaktor geschehen, in dem das N$_2$O$_4$ im Kreis gefahren wird; in der Reaktionsschleife oxidiert es das schwefelhaltige Polymer und in der Rückführungsschleife wird es mit Sauerstoff in Kontakt gebracht und zum N$_2$O$_4$ zurückoxidiert.

Es ist auch möglich, die Reaktion mit unterstöchiometrischen Mengen an N$_2$O$_4$ durchzuführen, wenn Sauerstoff bzw. Luft durch die Reaktionslösung geblasen wird. Hierbei wird das sich bei der Reaktion bildende N$_2$O$_3$ sofort wieder in der Reaktionsmischung zum N$_2$O$_4$ zurückoxidiert und kann somit mehrere Sulfid-Gruppen zum Sulfoxid oxidieren. Das eingesetzte N$_2$O$_4$ wirkt bei einer derartigen Reaktionsführung als Sauerstoffüberträger (Katalysator). Infolgedessen kann der Oxidationsgrad des Polymers durch die Reaktionsdauer gezielt eingestellt werden.

Durch einen starken Luft bzw. Sauerstoffstrom kann nach beendeter Oxidation das N$_2$O$_4$ aus einem Reaktor, z.B. aus einer Lösung oder Suspension ausgetrieben und in einer Kühlvorrichtung auskondensiert - und somit zurückgewonnen werden.

Ferner ist es möglich, die Reaktion mit einer unterstöchiometrischen Menge an N$_2$O$_4$ in einem Autoklaven mit einem Sauerstoffüberdruck durchzuführen. Das bei der Oxidation gebildete N$_2$O$_3$ wird hier sofort zum N$_2$O$_4$ zurückoxidiert.

Bei Verwendung von Lösemittel oder Suspensionsmittel kann die Reaktion sowohl diskontinuierlich in einem Rührkessel (batch-Prozeß) als auch in einem kontinuierlichen Reaktor, zum Beispiel einer Reaktor - Kaskade, bestehend aus mehreren Töpfen, oder einem Strömungsrohr durchgeführt werden. Bei Verwendung einer Reaktor-Kaskade kann beispielsweise die Zusammenführung der Reaktionsprodukte mit dem Lösungsmittel, bzw. Dispergiermittel in dem ersten Kaskaden-Topf, die Reaktion und Sauerstoff-Zugabe im zweiten Kaskaden-Topf und das Austreiben des $N_2O_4$ nach beendeter Oxidation in einem dritten Kaskaden-Topf stattfinden.

Das $N_2O_4$ (nach der Rückoxidation mit Sauerstoff), sowie gegebenenfalls das Lösungsmittel oder Suspensionsmittel können sowohl bei diskontinuierlicher als auch bei kontinuierlicher Reaktionsführung für weitere Reaktionen eingesetzt werden, so daß bei der Oxidationsreaktion alle Komponenten erneut verwendet werden und keine die Umwelt belastende Reststoffe auftreten.

Der erreichbare Oxidationsgrad des Polymers hängt von den genauen Reaktionsbedingungen ab.

Bei Zugabe von Luft bzw. Sauerstoff während der Reaktion können aufgrund der sofortigen Rückoxidation des gebildeten $N_2O_3$ zu $N_2O_4$ höhere Oxidationsgrade erzielt werden als es der Stöchiometrie des eingesetzten $N_2O_4$ entspricht.

Die Oxidationsprodukte der Reaktion von $N_2O_4$ mit einem schwefelhaltigen Polymer sind in vielen Fällen in Dichloressigsäure löslich und können hieraus in üblichen Verfahren verarbeitet werden.

Die gemäß der Erfindung erhaltenen oxidierten oder teiloxidierten schwefelhaltigen Polymere lassen sich entweder thermoplastisch verarbeiten oder können beispielsweise durch gängige Sinterverfahren weiterverarbeitet werden, jedoch ist dies abhängig von deren Schmelzpunkten. Die erste Gruppe, d.h. die thermoplastisch verarbeitbaren Verbindungen, kann durch die für Thermoplaste gängigen Verarbeitungsmethoden, z.B. Spritzguß oder Extrusion, in Form- und Funktionsteile übergeführt werden. Die Formmassen können auch bekannte pulverförmige Füllstoffe, wie Kreide, Talk, Ton, Glimmer, und/oder faserförmige Verstärkungsmittel, wie Glas- und Kohlenstoffasern, Wiskers, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Die zweite Gruppe, d.h. die durch Sinterverfahren verarbeitbaren Polymere, findet Verwendung bei Funktionsteilen mit einer hohen Temperatur- und Chemikalienbelastung.

Die gemäß der Erfindung erhaltenen Verbindungen lassen sich außerdem zu anderen Hochtemperatur-Thermoplasten, z.B. PPS oder flüssigkristallinen Polymeren in Pulvermischungen zusetzen. Wird diese Polymermischung in einer Form schnell erhitzt, erfolgt eine Reduktion der Sulfoxid-Brücken zum Sulfid, wobei eine Gasentwicklung eintritt. Diese Gasentwicklung führt zu einer Schaumbildung der eingesetzten Thermoplasten.

In den Beispielen bedeutet $T_g$ die Glasumwandlungstemperatur, $T_m$ ist der Schmelzpunkt.

Beispiele

1. In einem Reaktionsgefäß wurden 3 g eines Polyphenylensulfid-(PPS)-Pulvers ($M_w$ 30 000) mit einem mittleren Partikeldurchmesser von $500 \times 10^{-6}$ m, in 5 ml $N_2O_4$ bei einer Temperatur von minus 40°C für 2 Stunden zur Reaktion gebracht.

Nach der Reaktion wurde das Polymerpulver vom $N_2O_4$ abgetrennt und getrocknet. Im Infrarotspektrum und auch im ESCA-Spektrum konnte nur die ausschließliche Bildung von Sulfoxid-Gruppen beobachtet werden. $T_g$: 240°C, $T_m$: ≥ 370°C (Zersetzung).

Das Schwefel/Sauerstoff-Verhältnis des erhaltenen Polymers betrug in der ESCA-Analyse 1:1, d. h. die S-Brücken des eingesetzten PPS wurden zu SO-Gruppen oxidiert.

2. In einem Reaktionsgefäß wurden 3 g eines Polyphenylensulfid-(PPS)-Pulvers ($M_w$ 30 000) mit einem mittleren Partikeldurchmesser von $500 \times 10^6$ m, in 5 ml $N_2O_4$ bei einer Temperatur von 50° C für 1 Stunde zur Reaktion gebracht.

Nach der Reaktion wurde das Polymerpulver vom $N_2O_4$ abgetrennt und getrocknet. Im Infrarotspektrum und auch im ESCA-Spektrum konnte ebenfalls nur die ausschließliche Bildung von Sulfoxid-Gruppen beobachtet werden. $T_g$: 240° C, $T_m$: ≥ 370° C (Zersetzung).

Das Schwefel/Sauerstoff-Verhältnis des erhaltenen Polymers betrug in der ESCA-Analyse 1:1.

3. Polyphenylensulfoxid (PPSO)

In einem Reaktionsgefäß wurden 108 g eines Polyphenylensulfid-(PPS)-Pulvers (Mw 30 000) mit einem mittleren Partikeldurchmesser von $20 \times 10^{-6}$ m, in 500 ml Dichloressigsäure bei einer Temperatur von 10°C dispergiert. Unter gutem Rühren wurden 40 ml $N_2O_4$ innerhalb von 40 Minuten zugetropft. Die Temperatur der Reaktionsmischung wurde auf 40°C erhöht und 80 Minuten lang mit einem Luftstrom von 50 l/min durchblasen. Es entstand eine homogene, bräunlich gefärbte Lösung. Danach wurde das $N_2O_4$ mit einem stärkeren Luftstrom (100 l/min) ausgetrieben, die Lösung in Wasser ausgefällt, das Produkt abgesaugt, mit Wasser gewaschen und getrocknet.

Im Infrarotspektrum und auch im ESCA-Spektrum konnte nur die ausschließliche Bildung von Sulfoxid-Gruppen beobachtet werden.

Tg: 240 IIC, Tm: $\geq$ 370°IC (Zersetzung).

Das Schwefel/Sauerstoff-Verhältnis des erhaltenen Polymers betrug in der ESCA-Analyse 1:1.

4. Polyphenylensulfoxid (PPSO)

In eine aus drei Reaktionsgefäßen bestehenden Reaktor-Kaskade wurde eine Dispersion aus Polyphenylensulfid-(PPS)-Pulvers ($M_w$ 30 000) mit einem mittleren Partikeldurchmesser von $20 \times 10^{-6}$ m in Essigsäure, sowie in Essigsäure gelöstes $N_2O_4$ kontinuierlich zugegeben. Die Temperatur des ersten Kaskaden Topfes betrug 40°C, der des zweiten und dritten Topfes betrug 50°C. Im zweiten Topf wurde zusätzlich ein Luftstrom von 50 l/min durchgeleitet, im dritten Kaskaden Topf ein Luftstrom von 100 l/min. Die mittlere Verweilzeit der Gesamtkaskade betrug ca. 90 Minuten.

Nach Durchlauf durch die Kaskade wurde das Polymerpulver abgesaugt, mit Wasser gewaschen, abgetrennt und getrocknet. Im Infrarotspektrum und auch im ESCA-Spektrum konnte die Bildung von Sulfoxid-Gruppen beobachtet werden.

Tg: 240 IC, Tm: $\geq$370°C (Zersetzung).

Das Schwefel/Sauerstoff-Verhältnis des erhaltenen Polymers betrug in der ESCA-Analyse 1: 0,75.

5. Herstellung ultradünner Fasern aus Polyarylensulfoxid

Die Herstellung ultradünner Polyphenylensulfidfasern werden beispielsweise in EP 283 520 B1 (Beispiel 4, Seite 8) beschrieben, worauf Bezug genommen wird.

Ultradünne Polyarylensulfid- bzw. Polyphenylensulfidfasern werden analog zu den Beispielen 1, 2 oder 4 mit $N_2O_4$ behandelt.

Es werden ultradünne Polyarylensulfoxid- bzw. Polyphenylensulfoxidfasern erhalten.

Die Beispiele 1 und 2 zeigen, daß unterschiedliche Reaktionstemperaturen gleiche Ergebnisse liefern.

**Patentansprüche**

1. Verfahren zur Oxidation eines schwefelhaltigen Polymers, dadurch gekennzeichnet, daß das schwefelhaltige Polymer mit einem Gleichgewichtssystem aus $NO_2/N_2O_4$ in Kontakt gebracht wird, wobei die Oxidation in einer $N_2O_4$-Atmosphäre mit einer Konzentration größer 40 Mol% erfolgt oder mit flüssigem $N_2O_4$ durchgeführt wird, und somit die Schwefelbindungen im schwefelhaltigen Polymer teilweise oder vollständig in Sulfoxidbindungen überführt werden.

2. Verfahren nach Anspruch 1, dadurch gekennzeichnet, daß das schwefelhaltige Polymer in fester Form, gelöst oder suspendiert vorliegt.

3. Verfahren nach Anspruch 1 oder 2, dadurch gekennzeichnet, daß das schwefelhaltige Polymer ein Polyarylensulfid, insbesondere Polyphenylensulfid, ist.

4. Verfahren nach einem oder mehreren der Ansprüche 1 bis 3, dadurch gekennzeichnet, daß die mittlere Teilchengröße $D_{50}$ der schwefelhaltigen Polymere im Bereich von um $5 \times 10^{-7}$ bis um $5 \times 10^{-2}$ m, vorzugsweise um $5 \times 10^{-5}$ bis um $10^{-3}$ m und insbesondere um $10^{-5}$ bis um $10^{-4}$ m liegt.

5. Verfahren nach einem oder mehreren der Ansprüche 1 bis 4, dadurch gekennzeichnet, daß die Oxidation in einer Atmosphäre mit einer Konzentration von vorzugsweise größer 60 Mol-% und insbesondere größer 70 Mol-% durchgeführt wird.

6. Verfahren nach einem oder mehreren der Ansprüche 1 bis 5, dadurch gekennzeichnet, daß $NO_2$ oder $N_2O_4$ als Katalysator in Gegenwart von Sauerstoff verwendet wird.

7. Verfahren nach einem oder mehreren der Ansprüche 1 bis 6, dadurch gekennzeichnet, daß das schwefelhaltige Polymer in Essigsäure, 1,1-Dichlorethan, Dichlormethan, 1,1,2-Trichlor-1,2,2-trifluorethan, Dichloressigsäure, Trichloressigsäure oder Trifluoressigsäure suspendiert wird.

8. Verfahren nach einem oder mehreren der Ansprüche 1 bis 7, dadurch gekennzeichnet, daß das schwefelhaltige Polymer als Pulver, Faser, Vlies, Gewebe, Folie oder Formteil eingesetzt wird.

9. Verfahren nach Anspruch 8, dadurch gekennzeichnet, daß Teilchen, Fasern, Folien oder Formteile aus Polyarylensulfid mit einem Durchmesser oder einer Dicke von bis zu 50 µm eingesetzt werden.

10. Verfahren nach Anspruch 8, dadurch gekennzeichnet, daß die Oxidation des schwefelhaltigen Polymers nur an der Oberfläche der eingesetzten Pulver, Fasern, Vliese, Gewebe, Folien oder Formteile erfolgt

**Claims**

1. A process for the oxidation of a sulfur-containing polymer, which comprises bringing the sulfur-containing polymer into contact with an equilibrium system of $NO_2/N_2O_4$, the oxidation being performed in an $N_2O_4$ atmosphere having a concentration greater than 40 mol % or being carried out using liquid N$_2$O$_4$, and the sulfur bonds in the sulfur-containing polymer thus being partially or completely converted into sulfoxide bonds.

2. The process as claimed in claim 1, wherein the sulfur-containing polymer is present in solid form, dissolved or suspended.

3. The process as claimed in claim 1 or 2, wherein the sulfur-containing polymer is a poly(arylene sulfide), in particular poly(phenylene sulfide).

4. The process as claimed in one or more of claims 1 to 3, wherein the mean particle size D$_{50}$ of the sulfur-containing polymers is in the range from about 5 x 10$^{-7}$ to about 5 x 10$^{-2}$ m, preferably from about 5 x 10$^{-5}$ to about 10$^{-3}$ m and in particular from about 10$^{-5}$ to about 10$^{-4}$ m.

5. The process as claimed in one or more of claims 1 to 4, wherein the oxidation is carried out in an atmosphere having a concentration of preferably greater than 60 mol % and in particular greater than 70 mol %.

6. The process as claimed in one or more of claims 1 to 5, wherein NO$_2$ or N$_2$O$_4$ is used as catalyst in the presence of oxygen.

7. The process as claimed in one or more of claims 1 to 6, wherein the sulfur-containing polymer is suspended in acetic acid, 1,1-dichloroethane, dichloromethane, 1,1,2-trichloro-1,2,2-trifluoroethane, dichloroacetic acid, trichloroacetic acid or trifluoroacetic acid.

8. The process as claimed in one or more of claims 1 to 7, wherein the sulfur-containing polymer is used as powder, fiber, nonwoven, woven fabric, film or molding.

9. The process as claimed in claim 8, wherein particles, fibers, films or moldings of poly(arylene sulfide) having a diameter or a thickness of up to 50 μm are used.

10. The process as claimed in claim 8, wherein the oxidation of the sulfur-containing polymer occurs only on the surface of the powders, fibers, nonwovens, woven fabrics, films or moldings used.

**Revendications**

1. Procédé d'oxydation d'un polymère contenant du soufre, caractérisé en ce que le polymère contenant du soufre est mis en contact avec un système cons-

titué de NO$_2$/N$_2$O$_4$ à l'équilibre, l'oxydation s'effectuant dans une atmosphère de N$_2$O$_4$ à une concentration supérieure à 40% en mole, ou étant exécutée avec du N$_2$O$_4$ liquide, et les liaisons soufre dans le polymère contenant du soufre étant ainsi complètement ou partiellement transformées en liaisons sulfoxyde.

2. Procédé selon la revendication 1, caractérisé en ce que le polymère contenant du soufre se présente sous forme solide, en solution ou en suspension.

3. Procédé selon la revendication 1 ou 2, caractérisé en ce que le polymère contenant du soufre est un poly(sulfure d'arylène), en particulier du poly(sulfure de phénylène).

4. Procédé selon l'une ou plusieurs des revendications 1 à 3, caractérisé en ce que la taille moyenne des particules D$_{50}$ des polymères contenant du soufre se situe dans la plage d'environ 5 x 10$^{-7}$ à environ 5 x 10$^{-2}$ m, de préférence d'environ 5 x 10$^{-5}$ à environ 10$^{-3}$ m et en particulier d'environ 10$^{-5}$ à environ 10$^{-4}$ m.

5. Procédé selon l'une ou plusieurs des revendications 1 à 4, caractérisé en ce que l'oxydation est exécutée dans une atmosphère à une concentration de préférence supérieure à 60% en mole et en particulier supérieure à 70% en mole.

6. Procédé selon l'une ou plusieurs des revendications 1 à 5, caractérisé en ce que l'on utilise du NO$_2$ ou du N$_2$O$_4$ comme catalyseur en présence d'oxygène.

7. Procédé selon l'une ou plusieurs des revendications 1 à 6, caractérisé en ce que le polymère contenant du soufre est mis en suspension dans de l'acide acétique, du 1,1-dichloroéthane, du dichlorométhane, du 1,1,2-trichloro-1,2,2-trifluoroéthane, de l'acide dichloroacétique, de l'acide trichloroacétique ou de l'acide trifluoroacétique.

8. Procédé selon l'une ou plusieurs des revendications 1 à 7, caractérisé en ce que le polymère contenant du soufre est utilisé sous forme de poudre, de fibre, de feutre, de tissu, de feuille ou de pièce préformée.

9. Procédé selon la revendication 8, caractérisé en ce que l'on utilise des particules, des fibres, des feuilles ou des pièces préformées en poly(sulfure d'arylène) avec un diamètre ou une épaisseur allant jusqu'à 50 μm.

10. Procédé selon la revendication 8, caractérisé en ce que l'oxydation du polymère contenant ou soufre n'est effectuée qu'à la surface des poudres, des fibres, des feutres, des tissus, des feuilles ou des pièces préformées utilisés.